# FASCICULE DE BREVET EUROPEEN

(11) **EP 2 146 896 B1**
(45) Date de publication et mention de la délivrance du brevet: **18.07.2012**
(21) Numéro de dépôt: 08787887.2
(22) Date de dépôt: 31.03.2008
(51) Int. Cl.: B64C 27/26

(54) **HELICOPTERE HYBRIDE RAPIDE A GRANDE DISTANCE FRANCHISSABLE**
SCHNELLER WEITBEREICHS-HYBRIDHELIKOPTER
LONG RANGE FAST HYBRID HELICOPTER

(30) Priorité: 22.05.2007 FR 0703613
(43) Date de publication de la demande: 27.01.2010
(73) Titulaire: EUROCOPTER, 13725 Marignane Cédex (FR)
(72) Inventeur: ROESCH, Philippe, F-13100 Aix en Provence (FR)
(74) Mandataire: GPI & Associés
(86) Numéro de dépôt international: PCT/FR2008/000448
(87) Numéro de publication internationale: WO 2008/142257

(56) Documents cités:
- FR-A- 2 769 285
- US-A- 3 698 666
- US-A1- 2002 011 539

## Description

La présente invention concerne un giravion à grande distance franchissable et à vitesse d'avancement élevée en vol de croisière.

Plus particulièrement, l'invention se rapporte à un hélicoptère hybride relatif à un concept avancé d'aéronef à décollage et à atterrissage verticaux (désignation anglo-saxonne : « VTOL Aircraft » ou « Vertical Take-Off and Landing Aircraft »).

Ce concept avancé allie à un coût raisonnable l'efficacité du vol vertical de l'hélicoptère conventionnel aux performances à grande vitesse de déplacement permises par l'installation de turbomoteurs modernes.

Afin de bien comprendre l'objectif de l'invention, il convient de rappeler que les principaux matériels volants correspondent aux avions et aux giravions.

On désigne sous le nom de giravion tout appareil dont la sustentation est assurée totalement ou partiellement par une (ou plusieurs) hélice(s) d'axe sensiblement vertical, de grand diamètre, appelé rotor ou encore voilure tournante.

On distingue dans la catégorie des giravions plusieurs types distincts.

Tout d'abord, l'hélicoptère dont au moins un rotor principal, entraîné par une motorisation appropriée, assure à la fois la sustentation et la propulsion. L'hélicoptère est capable de vol stationnaire en restant en un point fixe de l'espace, peut décoller et atterrir verticalement et peut se déplacer dans n'importe quelle direction (avant-arrière-côtés-haut-bas). L'hélicoptère constitue la grande majorité de giravions produits dans le monde.

Ensuite, l'autogire (première réalisation par La Cierva) est un giravion dont le rotor ne reçoit pas de puissance, mais tourne en autorotation sous l'effet de la vitesse de l'appareil. La propulsion est assurée par un turbomoteur ou encore par une hélice, d'axe sensiblement horizontal en vol d'avancement, entraînée par un moteur classique. Cette formule n'est pas susceptible de vol vertical, sauf si le rotor est initialement lancé par un dispositif annexe permettant une mise en survitesse de ce rotor : un autogire ne peut donc pas faire de vol immobile mais seulement monter ou descendre sous des pentes de trajectoire très élevées. En quelque sorte, c'est un avion à grand écart de vitesse qui ignore le décrochage et peut utiliser des terrains courts.

Le girodyne est un giravion intermédiaire entre l'hélicoptère et l'autogire dont le rotor n'assure que la sustentation. Ce rotor est normalement entraîné par une installation motrice pour les phases de décollage, vol stationnaire ou vertical et atterrissage, à l'instar de l'hélicoptère. Un girodyne comporte aussi un système de propulsion additionnel essentiellement différent de l'ensemble rotor. En vol d'avancement, le rotor assure encore la sustentation, mais uniquement en mode autorotation, c'est-à-dire sans transmission de puissance au dit rotor. Le Jet girodyne de la Société Fairey est une réalisation relative à ce concept.

Plusieurs autres formules nouvelles ont fait l'objet d'études plus ou moins poussées dont certaines ont parfois donné lieu à des réalisations pratiques.

A ce titre, on peut citer le combiné qui décolle et atterrit comme un hélicoptère, et vole en croisière comme un autogire : son rotor, animé d'un mouvement d'autorotation grâce à la vitesse d'avancement de l'appareil, assure une partie de la portance, l'autre partie étant assurée par une aile auxiliaire, une hélice tractrice d'axe sensiblement horizontal crée l'effort nécessaire au mouvement de translation. Comme exemple, on peut citer le combiné expérimental SO 1310 Farfadet dont le rotor est propulsé par réaction en configuration décollage-atterrissage et tourne en autorotation en configuration croisière, la propulsion étant alors assurée par une hélice. L'appareil est muni de deux turbines séparées pour actionner le rotor et l'hélice.

Le convertible constitue une autre formule particulière de giravion. Cette désignation englobe tous les giravions qui changent de configuration au cours du vol : décollage et atterrissage en configuration hélicoptère, vol de croisière en configuration avion, deux rotors étant par exemple basculés de 90 degrés environ pour servir d'hélices. La formule des rotors basculants a donné lieu à la réalisation de l'appareil Bell Boeing V22 Osprey, par exemple.

De ces différentes formules de giravions, l'hélicoptère est la plus simple de sorte qu'elle s'est imposée malgré le fait que la vitesse maximale de translation de l'hélicoptère de l'ordre de 300 km/h est faible et inférieure à celle envisageable par les formules de type combiné ou convertible, techniquement plus complexes et plus onéreuses.

Dans ces conditions, des améliorations aux précédentes formules ont été proposées pour augmenter les performances des giravions sans pour autant conduire à des solutions compliquées, délicates à produire et à mettre en oeuvre et par voie de conséquence coûteuses.

Ainsi, on connaît par le brevet GB-895 590 un aéronef à décollage et atterrissage vertical qui comprend les principaux éléments suivants :
- un fuselage et deux demi-ailes, chacune de part et d'autre du fuselage,
- un empennage horizontal et une gouverne de direction,
- au moins quatre unités motrices interconnectées,
- un rotor principal,
- au moins deux hélices à pas réversible et variable l'une par rapport à l'autre,
- des moyens de contrôle par le pilote pour transmettre la puissance motrice ponctuellement ou totalement au rotor et aux hélices.

Dans ce cas, le rotor principal est entraîné en rotation par les unités motrices lors du décollage et de l'atterrissage, pendant le vol vertical et pour le vol horizontal à basse vitesse. A grande vitesse, le rotor tourne librement, sans transmission de puissance à la manière d'un autogire, l'arbre rotor étant équipé de moyens de désaccouplement.

Le brevet US-3,385,537 présente un hélicoptère avec, de façon classique, un fuselage, un rotor principal et un rotor arrière. Le rotor principal est entraîné en rotation par une première unité motrice. Cet appareil est également équipé de deux autres moteurs, chaque moteur étant disposé à l'extrémité externe de deux demi-ailes, chacune étant de part et d'autre dudit fuselage. La protection porte sur une variation automatique du pas des pales en fonction des accélérations exercées sur l'appareil lors de manoeuvres ou de rafales de vent par exemple, de manière à garder une répartition correcte de la portance entre le rotor et les demi-ailes. Le dispositif correspondant contribue de la sorte à une augmentation de la vitesse de translation de l'appareil en écartant les risques de décrochage des pales, sources de vibrations et de dommages des ensembles mécaniques et des structures.

Le brevet US-6,669,137 fait état d'un aéronef équipé d'une voilure tournante pour les évolutions à très faible vitesse. Aux vitesses élevées, la voilure tournante est ralentie puis stoppée, la portance étant alors produite par une aile orientable. Aux vitesses maximales, la voilure tournante et l'aile sont orientées dans une configuration déterminée pour former, en quelque sorte, une aile en flèche.

Le giravion selon le brevet US-7,137,591 comprend un rotor entraîné en rotation par une unité motrice notamment pour assurer le décollage, l'atterrissage et le vol vertical. Une hélice propulsive permet le vol de croisière, la portance étant générée par l'autorotation du rotor et éventuellement complétée par l'assistance d'une aile auxiliaire. De plus, le mât rotor est légèrement pivotable d'avant en arrière de façon à éliminer les effets dus à des changements d'attitude du fuselage et de nature à nuire aux performances de l'appareil par augmentation de la traînée aérodynamique.

On connaît également par le brevet US-6,467,726 un giravion comprenant au moins :
- un fuselage,
- deux ailes hautes,
- au moins quatre hélices propulsives,
- au moins deux rotors principaux, sans commande de pas cyclique, reliés chacun à chacune des deux ailes,
- deux moteurs et les moyens associés de transmission de puissance aux rotors et aux hélices,
- un système de contrôle du pas collectif de chaque hélice et du pas collectif de chaque rotor.

En vol de croisière, la portance est développée par les deux ailes, de sorte que la portance due au rotor est annulée sous l'action soit d'un désaccouplement du rotor via un embrayage prévu à cet effet, soit d'une adaptation adéquate du pas collectif des pales des rotors.

Le brevet US-6,513,752 concerne un giravion comprenant :
- un fuselage et une aile,
- deux hélices à pas variable,
- un rotor avec des masses « aux extrémités » (sic.),
- une source de puissance entraînant les deux hélices et le rotor,
- un moyen de contrôle pour ajuster le pas des hélices de sorte que :
   - en vol d'avancement, la poussée des hélices est exercée vers l'avant de l'aéronef,
   - en vol stationnaire, la fonction anticouple est réalisée par la poussée d'une hélice vers l'avant et celle de l'autre vers l'arrière de l'aéronef et le rotor est entraîné par la source de puissance,
- la source de puissance comprend un moteur et un embrayage, qui par déconnection du rotor par rapport au moteur permet au rotor de tourner plus vite qu'une sortie dudit moteur, en raison des masses précitées.

En complément, il est précisé que l'embrayage autorise le mode autogire en vol d'avancement. De plus, une boite de transmission de puissance disposée entre la source de puissance et les hélices permet auxdites hélices de fonctionner à plusieurs vitesses de rotation par rapport à la vitesse d'une sortie de ladite source de puissance.

A propos de l'art antérieur, il convient enfin de citer la demande de brevet US-2006/0269414 A1 qui traite le problème particulier de l'amélioration des performances d'un hélicoptère d'une part pendant le vol vertical et d'autre pendant le vol de croisière. On recherche alors une vitesse de rotation du rotor élevée dans le premier cas pour augmenter la portance alors que dans le deuxième cas, cette vitesse de rotation peut être réduite tout en accroissant la vitesse d'avancement de l'hélicoptère.

En conséquence, l'invention selon la demande de brevet US-2006/0269414 A1 se rapporte plus précisément à une boîte de transmission de puissance principale associée à une deuxième boite de transmission de puissance entraînée par l'installation motrice. La deuxième boite comprend un dispositif à embrayage qui, engagé, entraîne la boîte principale à une première vitesse de rotation, le désengagement lui communiquant une deuxième vitesse de rotation inférieure à ladite première vitesse de rotation. Bien évidemment, la boîte de transmission principale met en mouvement le ou les rotor(s).

Il ressort toutefois de ces considérations que les solutions techniques tendant à augmenter les performances d'un giravion sont basées essentiellement sur les propositions suivantes :
- fonctionnement du rotor à deux vitesses de rotation distinctes relatives d'une part au vol vertical et d'autre part au vol de croisière, au moyen d'une chaîne cinématique avec des rapports de vitesses de rotation variables entre l'installation motrice, le rotor, la (ou les) hélice(s) et les différents éléments composants cette chaîne cinématique.
- fonctionnement du rotor en mode autogire en vol de croisière : le rotor en rotation et sans apport de puissance motrice, sustente alors partiellement ou totalement le giravion, mais traîne d'où malgré tout une perte de puissance en raison d'une finesse aérodynamique réduite (finesse : rapport portance/traînée), alors qu'à contrario, le rotor d'un hélicoptère propulse l'appareil dans la direction désirée par le pilote.

En particulier, on a noté que le fonctionnement d'un rotor en autorotation à la manière d'un autogire en vol de croisière, exige en principe de désolidariser l'arbre d'entraînement en rotation du rotor de l'ensemble de la chaîne cinématique de transmission de puissance.

Par suite, cette désolidarisation est obtenue par un moyen tel qu'un embrayage dont la seule fonction est de stopper la mise en mouvement de rotation du rotor par la (ou les) source(s) de puissance et ceci uniquement lors du passage du vol vertical au vol de croisière.

Un dispositif de ce type implique donc un supplément de masse, de coût et une pénalité en matière de sécurité.
- arrêt du rotor et reconfiguration de celui-ci, par exemple, un rotor tripale, arrêté dans une configuration particulière, sert d'aile en flèche pour le vol à vitesse d'avancement élevée ou encore, après arrêt, on peut envisager de replier le rotor au-dessus du fuselage lors de la phase de transition giravion/avion.

On conçoit que ces solutions compliquent les réalisations techniques et contribuent à des augmentations de masse, donc de puissance installée et par conséquent de coût, sans pour autant parvenir à une optimisation de l'appareil. Le document US2002/0011539, qui décrit toutes les caractéristiques du préambule de la revendication 1, est considéré comme l'état de la technique la plus proche.

La présente invention a pour objet de proposer un hélicoptère hybride, encore appelé éventuellement « appareil » dans la suite du texte, permettant de s'affranchir des limitations mentionnées précédemment.

De préférence, cet hélicoptère hybride doit être capable d'effectuer des missions efficacement pendant des temps prolongés en vol vertical et d'assurer des vols de croisière à une vitesse élevée mais aussi de permettre de parcourir de longues distances franchissables.

A ce titre, les différentes performances et données chiffrées correspondent à des applications concrètes et illustratives mais ne doivent, en aucune manière être considérées comme limitatives.

La mission type correspond dans ce cas par exemple au transport à 220 kt de 16 passagers dans un appareil d'une masse de l'ordre de 8 tonnes au décollage sur 400 nm (« nautic miles ») à 1500 mètres d'altitude dans les conditions ISA relatives à la définition de l'atmosphère standard.

Ces performances sont tout à fait exceptionnelles en comparaison de celles d'un hélicoptère conventionnel du type AS 332 MKII, pourtant remarquables, de la demanderesse à savoir, au même tonnage une vitesse de croisière recommandée de 141 kt pour une distance franchissable analogue et une vitesse de croisière rapide de 153 kt.

Selon l'invention un hélicoptère hybride à grande distance franchissable et à vitesse d'avancement élevée dont les principaux éléments sont les suivants :
- une cellule, c'est-à-dire l'ossature générale de l'appareil, comprenant notamment :
   - un fuselage,
   - une surface sustentatrice fixée au fuselage,
   - des surfaces de stabilisation et de manoeuvre, à savoir pour la profondeur, un empennage horizontal avec au moins une gouverne de profondeur mobile par rapport à la partie avant ou « plan horizontal » et pour la direction, au moins un empennage approprié, et,
- une chaîne cinématique intégrée constituée par :
   - un système mécanique d'interconnexion entre d'une part un rotor avec un contrôle du pas collectif et du pas cyclique des pales de ce rotor et d'autre part au moins une hélice uniquement propulsive avec un contrôle du pas collectif des pales de cette hélice,
   - au moins un turbomoteur entraînant ce système mécanique d'interconnexion,
est remarquable en ce que les vitesses de rotation de sortie dudit au moins un turbomoteur, de ladite au moins une hélice, dudit rotor et dudit système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

On comprend ainsi que si l'hélicoptère hybride est équipé d'un seul turbomoteur, celui-ci entraîne en rotation le rotor et la (ou les) hélice(s) via le système mécanique d'interconnexion. Par contre, si deux turbomoteurs ou plus équipent l'hélicoptère hybride, le rotor et la (ou les) hélice(s) sont alors entraînés en rotation via le système mécanique d'interconnexion par lesdits turbomoteurs.

Autrement dit, la chaîne cinématique fonctionne sans rapport de vitesse de rotation variable entre le (ou les) turbomoteur(s), la (ou les) hélice(s), le rotor et le système mécanique d'interconnexion.

Par conséquent et de façon avantageuse, le rotor demeure toujours entraîné en rotation par le (ou les) turbomoteur(s), et développe toujours une portance quelle que soit la configuration de l'appareil.

Plus précisément, le rotor est destiné à assurer la totalité de la portance de l'hélicoptère hybride pendant les phases de décollage, d'atterrissage et de vol vertical puis partiellement pendant le vol de croisière, l'aile contribuant alors pour partie à supporter ledit hélicoptère hybride.

Par ailleurs, et comme détaillé ultérieurement, il importe de noter que la possibilité d'atteindre des vitesses d'avancement importantes par l'hélicoptère hybride impose de réduire la vitesse de l'écoulement d'air en bout de pales avançantes du rotor pour éviter tout risque d'apparition de phénomènes de compressibilité dudit écoulement d'air. En d'autres termes, il faut réduire la vitesse de rotation dudit rotor sans augmenter son coefficient de portance moyen, d'où de façon subséquente une réduction de la portance exercée par ce rotor.

Ainsi, le rotor exerce partiellement la sustentation de l'hélicoptère hybride en vol de croisière avec éventuellement une faible contribution aux forces propulsives ou traction (cas de l'hélicoptère), mais sans aucune contribution à la traînée (cas de l'autogire). Ces conditions de fonctionnement conduisent donc à une fourniture réduite de puissance dédiée à la traction du rotor. A noter qu'une faible contribution aux forces propulsives se fait par une faible inclinaison du disque rotor vers l'avant de l'appareil. Ce processus dégrade très peu la finesse du rotor et se révèle par suite plus intéressant en terme de bilan de puissance qu'une demande de poussée supplémentaire exercée par la (ou les) hélice(s).

Pour ce faire en vol de croisière, l'aile fournit le complément de portance nécessaire.

De façon avantageuse, l'aile est composée de deux demi-ailes, chaque demi-aile étant de part et d'autre du fuselage. Ces demi-ailes peuvent constituer une aile haute, auquel cas elles présentent de préférence un dièdre négatif. Cependant, elles peuvent aussi constituer soit une aile basse avec de préférence un dièdre positif ou encore une aile intermédiaire avec un dièdre quelconque. La forme en plan de ces demi-ailes, selon les variantes, peut correspondre à des demi-ailes rectangulaires, effilées, en flèche avant ou arrière,... De façon favorable, l'envergure de l'aile totale est comprise entre 7 et 9 mètres pour un appareil dont la masse maximale autorisée au décollage est voisine de 8 tonnes.

Dans une version préférée, l'envergure totale de l'aile est sensiblement égale au rayon du rotor, c'est-à-dire sensiblement égale à 8 mètres, la corde de cette aile étant fixée à 1,50 mètre soit un allongement de l'ordre de 5,30.

Selon une variante de l'invention, l'aile est munie d'ailerons.

De préférence, l'hélicoptère hybride est équipé de deux hélices propulsives placées de part et d'autre du fuselage, avantageusement à l'extrémité des deux demi-ailes. Pour satisfaire aux performances de l'appareil, chaque hélice a un diamètre qui peut être compris entre 2,5 et 4,5 mètres mais non exclusivement, le diamètre des hélices étant de 2,6 mètres comme expliqué ultérieurement dans une version étudiée particulière.

Bien évidemment, le rotor étant toujours entraîné mécaniquement par le ou les turbomoteurs, ce rotor produit un « couple rotor résistant » ayant tendance à faire tourner le fuselage en sens inverse de celui du rotor. En général, les constructeurs installent à l'arrière du fuselage un rotor anticouple afin de compenser le couple rotor. Ce rotor anticouple d'un hélicoptère conventionnel se situe à l'arrière du fuselage et à une distance de l'ordre de 1,25 fois le rayon du rotor principal, de façon à éviter toute interférence mécanique entre eux. Un tel rotor requiert généralement environ 12% de la puissance du rotor principal en vol vertical. De plus, la poussée de ce rotor est également utilisée pour le contrôle en direction de l'hélicoptère.

De façon avantageuse, l'hélicoptère hybride selon l'invention ne dispose pas de rotor anticouple dans le but de simplifier les ensembles mécaniques et de réduire en conséquence la masse et le coût de l'appareil.

Dans ce cas, l'hélicoptère hybride est équipé de deux hélices au moins, chacune étant installée sur une demi-aile de chaque côté du fuselage et, les fonctions anticouple et de contrôle de direction sont réalisées par utilisation d'une poussée différentielle exercée par les hélices.

On note que les hélices peuvent être disposées sensiblement en alignement par rapport au plan des cordes des ailes ou demi-ailes mais encore déportées soit au dessus, soit au dessous des ailes ou demi-ailes auxquelles elles sont reliées par un mât support.

Autrement dit, et en vol vertical, l'hélice à gauche du fuselage exerce une poussée vers l'arrière de l'appareil (ou « poussée arrière » tandis que l'hélice à droite produit une poussée vers l'avant (ou « poussée avant »), dans l'hypothèse où le rotor tourne dans le sens anti-horaire, vu de dessus.

Or, l'envergure de l'aile est avantageusement de l'ordre de grandeur du rayon du rotor c'est-à-dire aussi réduite que possible en raison de la finesse élevée du rotor en vol de croisière, comme cela est expliqué ultérieurement. Il en résulte que la distance de séparation entre les deux hélices est également de l'ordre de grandeur du rayon du rotor. Dans ces conditions, la poussée des hélices est nécessairement supérieure à celle d'un rotor anticouple.

De plus, et sur la base des données géométriques présentées précédemment à titre d'exemple, le diamètre des hélices doit être réduit de 3,0 mètres pour une hélice classique à 2,6 mètres environ pour l'hélicoptère hybride de manière à permettre un espace suffisant entre ledit rotor et lesdites hélices, d'où une autre augmentation de la puissance nécessaire à la fonction anticouple.

Quoiqu'il en soit, cette pénalité en terme de puissance est largement compensée par la marge importante de puissance en vol vertical (voir ultérieurement) et par les gains de masse et de coût résultant de la suppression du rotor anticouple et du système de transmission de puissance associé représenté par des lignes d'arbres horizontales et obliques de transmission de puissance et des boîtes d'engrenages dites « intermédiaire » et « arrière ».

En variante, la fonction anticouple peut également être réalisée de telle sorte que, sur l'exemple précédent, l'hélice droite développe une poussée doublée, l'hélice gauche ne fournissant pas de poussée, étant entendu que le rotor sous l'action du pas cyclique doit alors être incliné vers l'arrière de l'appareil pour équilibrer la poussée de l'hélice droite. Dans ce cas, on montre que la puissance est supérieure à celle exigée lorsque les deux hélices fournissent des poussées en sens inverse.

Naturellement, on conçoit qu'une solution intermédiaire peut correspondre à une fonction anticouple réalisée par un mixage des deux concepts précédents (poussée différentielle pure d'une part et poussée double d'autre part).

Un autre intérêt de l'invention tient au fait que la vitesse de rotation du rotor est égale à une première vitesse de rotation Ω1 jusqu'à une première vitesse air sur trajectoire V1 dudit hélicoptère hybride puis est réduite progressivement suivant une loi linéaire en fonction de la vitesse d'avancement de l'appareil. Si l'on désigne par Ω2 la vitesse de rotation d'un rotor de rayon R d'un hélicoptère hybride se déplaçant à une vitesse air sur trajectoire V, la vitesse résultante de l'air à l'extrémité d'une pale avançante vaut V + U en bout de pale avec une vitesse U égale à ΩR. Dans ces conditions, la pente de ladite loi linéaire est avantageusement égale à (-1/R) dans un système de coordonnées où la vitesse V est en abscisse et la vitesse de rotation Ω en ordonnée. En effet, le nombre de Mach en bout de pale avançante est alors maintenu constant.

En pratique, la vitesse de rotation du rotor est réduite progressivement jusqu'à une deuxième vitesse de rotation Ω2 correspondant à une deuxième vitesse air sur trajectoire V2 qui est la vitesse maximale de l'hélicoptère hybride.

Toutefois, on comprend que cet hélicoptère hybride peut voler en vol de croisière à une vitesse air sur trajectoire quelconque, inférieure ou égale à la vitesse air sur trajectoire maximale de telle sorte que la vitesse de rotation du rotor Ω est égale à sa première vitesse de rotation en dessous de V1 puis déterminée par la précédente loi linéaire entre V1 et la deuxième vitesse air sur trajectoire ou vitesse maximale V2.

Par conséquent, ce processus permet notamment de maintenir le nombre de Mach à l'extrémité extérieure des pales du rotor en position avançante à une valeur au plus égale à 0,85, ci après appelé nombre de Mach maximal. Cette valeur est fixée de sorte à demeurer inférieure au nombre de Mach de divergence de traînée pour lequel la traînée du rotor augmente considérablement en affectant alors la finesse de l'appareil et par suite ses performances, tout en générant des vibrations pénalisantes en termes de confort, de sécurité et de durée de vie des composants dudit appareil.

En effet, la vitesse de rotation d'un rotor de giravion est conditionnée par le diamètre du rotor en raison d'une vitesse en bout de pale limitée par l'homme du métier entre 200 et 250 mètres par seconde et ceci afin d'éviter des dégradations des performances aérodynamiques dudit rotor.

Or, la vitesse de l'air en bout de la pale dite avançante est égale à la vitesse de l'air due à la vitesse d'avancement du giravion et de la vitesse de l'air U due à la rotation du rotor.

Par suite et à une vitesse de rotation du rotor donnée, tout accroissement de la vitesse d'avancement du giravion entraîne une augmentation proportionnelle du nombre de Mach, égal à la vitesse en bout de pale divisée par la célérité du son. Comme exprimé ci-dessus, il convient de maintenir le nombre de Mach inférieur ou égal au nombre de Mach de divergence de traînée du profil d'extrémité correspondant à l'apparition d'effets de compressibilité de l'écoulement d'air en bout de pale qui conduisent aux inconvénients précités.

A titre d'exemple et sur la base d'une part d'un nombre de Mach maximal fixé à 0,85 et d'autre part d'une vitesse de 220 mètres par seconde en bout de pale due à la rotation du rotor de 16 mètres de diamètre en vol stationnaire, il s'avère que le nombre de Mach de la pale avançante atteint 0,85 pour une vitesse d'avancement du giravion égale à 125 kt, à une altitude de 1500 mètres dans les conditions de températures ISA, soit 5°C.

On comprend donc que la vitesse d'avancement maximale prévue étant bien supérieure à cette valeur, à savoir 220 kt par exemple, il importe de remédier à toute augmentation du nombre de Mach au-delà de 0,85.

Selon l'invention, il est rappelé qu'il est donc proposé à partir de 125 kt environ de réduire progressivement la vitesse de rotation du rotor, de la première Ω1 à la deuxième Ω2 vitesse de rotation dudit rotor pour limiter la vitesse de l'air en bout de pale avançante, par exemple à 171 mètres par seconde à une vitesse air sur trajectoire de 220 kt, de façon à maintenir le nombre de Mach en bout de pale avançante à 0,85.

Bien entendu, cette réduction de vitesse de rotation du rotor est accompagnée d'une diminution de portance dudit rotor. Par conséquent, l'aile compense cette diminution de portance de sorte à contribuer à 31% à la portance à 220 kt comme précisé par la suite à propos d'un exemple d'application particulier.

Il est encore à noter que l'aile génère une portance quelle que soit la vitesse d'avancement du giravion, sauf en vol stationnaire où elle présente un effet particulier de « déportance » ou portance négative liée à une interaction aérodynamique entre le rotor et ladite aile.

En conséquence, la portance du rotor en vol de croisière est avantageusement contrôlée par un dispositif approprié de préférence automatique pour le pilotage du pas collectif et le respect de la vitesse de rotation du rotor avec les valeurs de consigne relatives à ladite vitesse de rotation du rotor.

Dans ces conditions et pour la version étudiée particulière, la vitesse de rotation du rotor est égale à une première vitesse de rotation Ω1 de l'ordre de 260 tours par minute jusqu'à la première vitesse d'avancement plus correctement dite première vitesse air sur trajectoire V1, de l'ordre de 125 kt. Au-delà et jusqu'à une deuxième vitesse air sur trajectoire V2 de l'ordre de 220 kt, la vitesse de rotation du rotor est réduite progressivement à une deuxième vitesse de rotation Ω2 de l'ordre de 205 tours par minute.

De préférence, les valeurs suivantes sont donc retenues :
- première vitesse de rotation Ω1 du rotor : 263 tr/mn
- deuxième vitesse de rotation Ω2 du rotor : 205 tr/mn
- première vitesse air sur trajectoire V1 : 125 kt
- deuxième vitesse air sur trajectoire V2 : 220 kt.

Cette solution préférée correspond à une finesse maximale du rotor de l'ordre de 12,2 entre 150 et 220 kt, la finesse de l'ensemble rotor et aile dépassant 12 au-delà de 150 kt.

Par conséquent, on est assuré que le nombre de Mach à l'extrémité des pales en position avançante est inférieur à 0,85 jusqu'à la première vitesse air sur trajectoire puis est maintenu constant et égal à 0,85 entre les première et deuxième vitesses air sur trajectoire.

On comprend aisément qu'en raison du rapport de proportionnalité constant entre les vitesses de rotation des différents composants de la chaîne cinématique intégrée, que le (ou les) turbomoteur(s), la (ou les) hélice(s), le rotor et le système mécanique d'interconnexion fonctionnent eux aussi, au rapport de proportionnalité près à une première vitesse de rotation, ainsi qu'à une deuxième vitesse de rotation. En d'autres termes, on définit une première et une deuxième vitesses de rotation, relatives respectivement à une première et une deuxième vitesses air sur trajectoire, à propos du (ou des) turbomoteur(s), de la (ou des) hélice(s) et du système mécanique d'interconnexion. On note que ces deuxièmes vitesses de rotation correspondent à 78% des premières vitesses de rotation (vitesses nominales : 100% des premières vitesses de rotation) dans le cas d'application déjà commentée.

Bien évidemment, les vitesses de rotation du (ou des) turbomoteur(s), de la (ou des) hélice(s) et du système mécanique d'interconnexion sont réduites progressivement entre leurs première et deuxième vitesses de rotation respectives, conformément à l'évolution de la vitesse de rotation du rotor entre ses propres première et deuxième vitesses de rotation selon une loi linéaire ou sensiblement linéaire.

A ce propos, il convient de rappeler qu'il n'est en aucun cas fait appel à des rapports de vitesses de rotation variables entre l'installation motrice, le rotor, la (ou les) hélice(s) et les différents composants de la chaîne cinématique intégrée.

Bien entendu, le pas collectif et le pas cyclique des pales du rotor sont adaptés à l'évolution de la vitesse de rotation du rotor, en fonction de la vitesse air sur trajectoire de l'appareil.

De même, le pas collectif des hélices est contrôlé automatiquement pour fournir la poussée nécessaire.

Un autre avantage selon l'invention consiste en vol de croisière à contrôler le pas cyclique longitudinal du rotor afin de maintenir l'attitude du fuselage à un angle de tangage (ou angle d'assiette longitudinale) égal à la pente de la trajectoire, de façon à annuler l'angle d'incidence du fuselage par rapport à l'air et minimiser ainsi les traînées dudit fuselage. Par suite et lors d'un vol de croisière en palier, l'assiette longitudinale de l'hélicoptère hybride sera maintenue à une valeur nulle. Par ailleurs et de façon avantageuse, le moment de tangage du fuselage doit également être réglé grâce à la manoeuvre d'au moins une gouverne de profondeur mobile équipant l'empennage horizontal via par exemple un actionneur électrique de façon à compenser tout déport du centre de gravité dudit hélicoptère hybride : ce réglage est obtenu en principe quand le moment de flexion exercé sur le mât rotor par rapport à l'axe de tangage, mesuré par des jauges de contrainte par exemple, est annulé.

En effet, il est avantageux de pouvoir régler, voire d'annuler, le moment de tangage du fuselage car, d'une part celui-ci agit directement sur le moment de flexion dans le mât rotor et donc sur les sollicitations en fatigue de ce dernier, et d'autre part traduit l'équilibre global de l'appareil résultant de la répartition de puissance entre les hélices et le rotor. Or, cette répartition influe sur le bilan global de puissance car les hélices et le rotor ont des rendements respectifs différents.

Pendant cette opération, la répartition de la puissance entre le rotor et les hélices peut varier significativement en fonction de l'inclinaison du disque rotor en raison de sa contribution aux variations de la traînée totale et de la propulsion de l'appareil. A titre d'exemple, la puissance nécessaire en vol de croisière à grande vitesse est due principalement à la traînée parasite de l'appareil. A 140 kt, la puissance parasite représente approximativement 50% de la puissance totale requise et peut atteindre 75% à 220 kt, soit trois fois la puissance nécessaire à la sustentation. L'efficacité à grande vitesse dépend donc d'une minimisation de cette traînée parasite.

L'hélicoptère hybride est également novateur en ce qu'il comprend des premiers moyens pour commander éventuellement automatiquement l'angle de braquage de ladite au moins une gouverne de profondeur en fonction du moment de flexion exercé sur le mât rotor par rapport à l'axe de tangage dudit hélicoptère hybride et des deuxièmes moyens pour commander le pas cyclique des pales dudit rotor afin de piloter l'assiette longitudinale de l'hélicoptère hybride en fonction des conditions de vol.

Comme on le conçoit, ce pilotage est rendu possible grâce aux deux degrés de liberté offerts par le braquage d'au moins une gouverne de profondeur et d'autre part, par le pilotage du pas cyclique des pales du rotor, les premiers et deuxièmes moyens étant indépendants les uns des autres.

En pratique, le réglage de la gouverne de profondeur peut se faire de façon manuelle dans une version simplifiée. Il y a alors nécessité de disposer sur la planche de bord, un indicateur du moment de flexion exercé sur le mât rotor que le pilote doit maintenir dans une plage déterminée grâce à une action manuelle de ladite gouverne de profondeur mobile ou encore sur l'actionneur électrique.

Lorsque la manoeuvre de la gouverne de profondeur est effectuée de façon automatique dans une version améliorée, lesdits premiers moyens, en commandant automatiquement l'angle de braquage de ladite au moins une gouverne de profondeur via un actionneur électrique par exemple, ajustent le moment de tangage dudit hélicoptère hybride à une première valeur de consigne qui est de préférence égale à zéro.

Ces premiers moyens comprennent un calculateur qui commande un actionneur électrique entraînant en rotation ladite au moins une gouverne de profondeur selon un angle de braquage qui adapte le moment de tangage de l'hélicoptère hybride à ladite première valeur de consigne.

Pour ce faire, ledit calculateur détermine le moment de flexion exercé sur le mât rotor par rapport à l'axe de tangage déduit des informations issues de capteurs, ledit calculateur cessant de braquer ladite gouverne de profondeur quand le moment de flexion exercé sur le mât rotor est dans une plage prédéterminée correspondant sensiblement à la première valeur de consigne, préférentiellement égale à zéro, du moment de tangage dudit hélicoptère hybride.

Autrement dit, l'expression « première valeur de consigne du moment de tangage » désigne aussi bien une valeur précise qu'une étroite plage de valeurs de ce moment de tangage en raison notamment de la dépendance du moment de flexion exercé sur le mât rotor vis-à-vis du moment de tangage de l'hélicoptère hybride.

En outre, le moment de tangage étant contrôlé et de préférence annulé, il convient encore de contrôler l'assiette longitudinale de l'hélicoptère hybride et notamment de l'annuler pour minimiser les traînées parasites. Les deuxièmes moyens adaptent donc ladite assiette longitudinale à une deuxième valeur de consigne, de préférence égale à zéro. Ces deuxièmes moyens comprennent un manche cyclique qui commande le pas cyclique, notamment longitudinal, des pales du rotor via un plateau cyclique et des leviers de pas.

Bien entendu, on rappelle que le pas cyclique latéral intervient également pour les évolutions en lacet de l'appareil, les variations du pas collectif des pales du rotor faisant seulement varier la portance de chaque pale dans les mêmes proportions.

Naturellement, l'empennage approprié pour le pilotage en lacet de l'hélicoptère hybride peut avantageusement comprendre en avant une partie fixe ou dérive et en arrière une partie mobile ou gouverne de direction. Bien évidemment, l'appareil peut être équipé de plusieurs empennages, sensiblement verticaux ou éventuellement inclinés par rapport à la verticale, munis chacun d'une gouverne de direction.

Les différentes fonctionnalités précédemment présentées sont possibles grâce à un système mécanique d'interconnexion approprié pour la transmission de puissance. Un tel système doit permettre la transmission de couples importants en raison notamment d'un niveau de puissance absorbée élevée et d'une vitesse de rotation du rotor relativement faible. Cela exige de grands rapports de réduction des vitesses de rotation entre les différents constituants de la chaîne cinématique tout en respectant une masse aussi faible que possible et en assurant une bonne endurance et une sécurité totale.

En pratique le système mécanique d'interconnexion comprend les principaux composants suivants :
- une première boîte d'engrenages principale située au niveau du fuselage pour l'entraînement du rotor à 263 tr/mn au régime nominal de rotation (100% de la première vitesse de rotation du rotor), ou première vitesse de rotation du rotor,
- deux deuxièmes boîtes d'engrenages pour l'entraînement des hélices, une boîte d'engrenage entraînant chaque hélice à 2000 tr/mn au régime de rotation nominal, ou première vitesse de rotation de chaque hélice,
- un premier arbre, mis en rotation par la première boîte d'engrenages, pour l'entraînement du rotor,
- deux deuxièmes arbres, chacun d'eux étant disposé dans une demi-aile respective, sensiblement au quart de corde, et distribuant la puissance au rotor et aux hélices, la vitesse de rotation de ces arbres étant en outre de 3000 tr/mn au régime nominal de rotation ou première vitesse de rotation des deuxièmes arbres,
- les deux deuxièmes arbres sont entraînés en rotation par un ou plusieurs turbomoteurs via un ou plusieurs modules associés qui, selon le type de turbomoteurs, réduisent la vitesse des turbomoteurs de 21000 tr/mn ou de 6000 tr/mn à 3000 tr/mn pour la première vitesse de rotation desdits arbres.

Cette architecture reste valable pour un montage des turbomoteurs aussi bien au niveau du fuselage que sur les demi-ailes. Dans ce dernier cas, chaque module de réduction de vitesse est intégré à la deuxième boîte d'engrenages des hélices correspondante au lieu d'être disposé de part et d'autre de la première boîte d'engrenages principale.

En version de base, la première boîte d'engrenages principale comprend deux étages, à savoir :
- une couronne dentée spiroconique entraînée par deux engrenages coniques, connectés chacun à l'un desdits deuxièmes arbres,
- cette couronne entraînant à 1000 tr/mn, à la première vitesse de rotation de l'installation, le planétaire d'un étage épicycloïdal de façon à mettre en rotation le rotor via des pignons satellites en rotation sur une couronne externe fixe.

Les deux modules associés comportent un ou deux étages de réduction en fonction de la vitesse de rotation des sorties des turbomoteurs. En général, un étage suffit pour une vitesse de sortie d'un turbomoteur à 6000 tr/mn alors que deux étages sont nécessaires pour une vitesse de sortie de 21 000 tr/mn.

Par ailleurs, les deux deuxièmes boîtes d'engrenages sont équipées d'un seul étage de réduction de vitesse, la première vitesse de rotation des hélices (régime nominal de rotation) étant de l'ordre de 2 000 tr/mn.

Bien évidemment, le nombre de turbomoteurs n'est pas limitatif.

L'invention et ses avantages apparaîtront avec plus de détails dans le cadre de la description qui suit avec des exemples de réalisation donnés à titre illustratif en référence aux figures annexées qui représentent :
- figure 1 : une vue en perspective schématique d'un exemple de réalisation d'un hélicoptère hybride selon l'invention,
- figure 2 : une vue schématique de la chaîne cinématique,
- figure 3 : un schéma du dispositif de réglage de l'assiette longitudinale de l'hélicoptère hybride,
- figure 4 : un schéma de la loi de variation de la vitesse de rotation du rotor en fonction de la vitesse d'avancement de l'hélicoptère hybride.

Les éléments présents dans plusieurs figures distinctes sont affectés d'une seule et même référence.

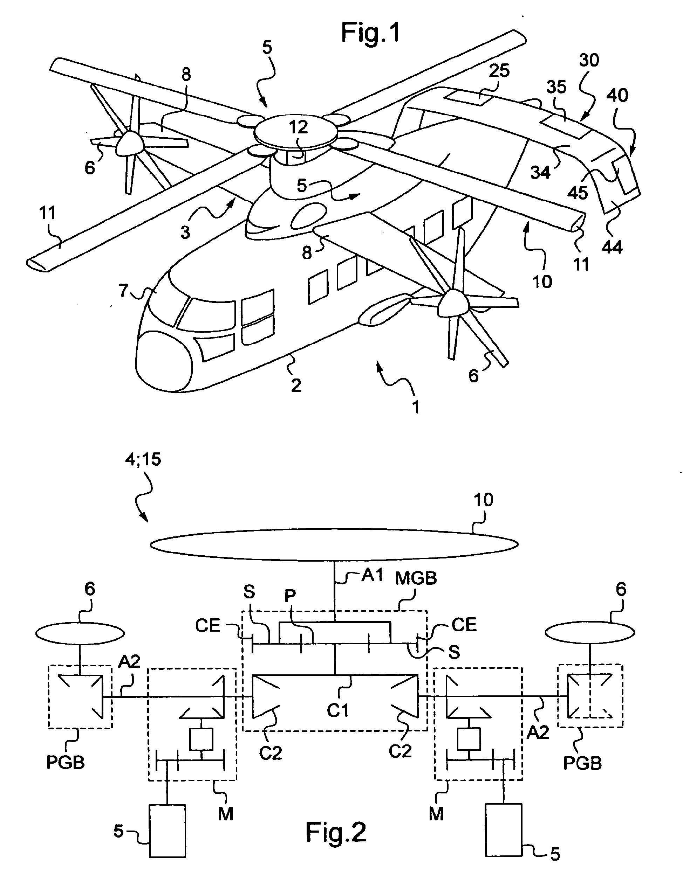

Sur la figure 1, on a représenté un hélicoptère hybride 1, réalisé conformément à l'invention.

Comme cela est usuel, l'hélicoptère hybride 1 comprend un fuselage 2, à l'avant duquel est prévu le poste de pilotage 7, un rotor 10 destiné à entraîner en rotation des pales 11 grâce d'une part à deux turbomoteurs 5 disposés sur le dessus du fuselage 2 (non visibles sur la figure 1 en raison de la présence de carénages), de part et d'autre par rapport au plan de symétrie longitudinal de l'appareil, et d'autre part à une première boîte d'engrenages principale MGB, non représentée sur la figure 1.

De plus, l'hélicoptère hybride 1 est pourvu d'une aile haute 3 composée de deux demi-ailes 8 disposées sur le dessus du fuselage 2, ces demi-ailes 8 ayant une forme en plan sensiblement rectangulaire et présentant un dièdre négatif.

La propulsion de l'hélicoptère hybride 1 est assurée par deux hélices 6 entraînées par les deux turbomoteurs 5, une hélice 6 étant disposée à chaque extrémité externe de l'aile 3.

Par ailleurs, il est prévu, au voisinage de l'extrémité arrière du fuselage 2, des surfaces de stabilisation et de manoeuvre à savoir pour la profondeur, un empennage horizontal 30 avec deux gouvernes de profondeur mobiles 35 par rapport à la partie avant 34 et pour la direction deux empennages appropriés 40, chacun de chaque côté de l'empennage horizontal 30.

En l'occurrence, l'empennage horizontal 40 et les empennages verticaux 50 forment un U renversé vers le fuselage 2.

Avantageusement, les empennages 40, verticaux ou inclinés par rapport à la verticale, peuvent être constitués d'une partie avant fixe (ou dérive) 44 avec en arrière une partie mobile, ou gouverne de direction 45 pour le pilotage en lacet.

Du point de vue dimensionnel, l'hélicoptère hybride 1 correspond de préférence aux caractéristiques suivantes, relatives à un appareil d'environ 8 tonnes de masse maximale autorisée au décollage :
- diamètre D du rotor : 16 mètres environ,
- diamètre d des hélices : 2,6 mètres,
- envergure L de l'aile : 8 mètres,
- allongement λ de l'aile : 5,3.

De plus, l'hélicoptère hybride 1 est équipé d'une chaîne cinématique intégrée 4, qui, outre les deux turbomoteurs 5, le rotor 10 et les deux hélices 6, comprend un système mécanique d'interconnexion 15 entre ces éléments comme schématisé sur la figure 2, qui correspond à une représentation simplifiée de sorte qu'il faut comprendre que le rotor 10 et les hélices 6 sont en rotation dans des plans sensiblement orthogonaux et non parallèles.

Avec cette configuration, cet hélicoptère hybride 1 est remarquable en ce que les vitesses de rotation des sorties des turbomoteurs, des hélices, du rotor et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Bien évidemment, des dispositifs particuliers, sortant du cadre de l'invention, sont activés lors de pannes mécaniques éventuelles.

En référence à la figure 2, le système mécanique d'interconnexion comprend les principaux composants suivants :
- une première boîte d'engrenages principale MGB située au niveau du fuselage 2 entraînant le rotor 10 à 263 tr/mn au régime nominal de rotation (ou la première vitesse de rotation du rotor),
- deux deuxièmes boîtes d'engrenages PGB d'entraînement des hélices 6, une boîte d'engrenages PGB entraînant chaque hélice 6 à 2000 tr/mn au régime de rotation nominal,

- un premier arbre A1, mis en rotation par la première boîte d'engrenages MGB, pour l'entraînement du rotor 10,
- deux deuxièmes arbres A2, chacun d'eux étant disposé dans une demi-aile 8 respective, sensiblement au quart de corde, et distribuant la puissance au rotor 10 et aux hélices 6, la vitesse de rotation de ces arbres étant en outre de 3000 tr/mn au régime nominal de rotation ou première vitesse de rotation des deuxièmes arbres,
- les deux deuxièmes arbres A2 sont entraînés en rotation par les deux turbomoteurs 5 via deux modules associés M qui, selon le type de turbomoteurs, réduisent la vitesse des turbomoteurs 5 de 21000 tr/mn ou de 6000 tr/mn à 3000 tr/mn pour la première vitesse de rotation desdits arbres.

En version de base, la première boîte d'engrenages principale MGB comprend deux étages, à savoir :
- une couronne dentée spiroconique C1 entraînée par deux engrenages coniques C2, connectés chacun à l'un desdits deuxièmes arbres A2,
- cette couronne C1 entraînant à 1000 tr/mn, à la première vitesse de rotation de l'installation, le planétaire P d'un étage épicycloïdal de façon à mettre en rotation le rotor via des pignons satellites S en rotation sur une couronne externe fixe CE.

Les différentes dispositions précédentes confèrent à l'hélicoptère hybride 1 les autres caractéristiques suivantes :
- finesse f du rotor de l'ordre de 12,2 pour une vitesse air sur trajectoire supérieure à 150 kt,
- finesse F du rotor et de l'aile de l'ordre de 12, pour une vitesse air sur trajectoire supérieure à 150 kt,
- vitesse maximale de l'appareil : 220 kt,
- portance du rotor : 1,05 fois le poids de l'hélicoptère en vol vertical et entre 0,6 et 0,9 fois ce poids à la vitesse air sur trajectoire maximale, le rotor 10 étant entraîné en permanence par les turbomoteurs 5 avec une puissance absorbée réduite en vol de croisière à 500 kW environ.

De façon préférentielle, on note que le rapport de la portance du rotor 10 au poids de l'hélicoptère hybride 1 prend successivement les valeurs intermédiaires de 0,98 à 50 kt/0,96 à 80 kt/0,90 à 125 kt/0,85 à 150 kt et 0,74 à 200 kt.

En outre, l'hélicoptère hybride 1 est tel que le pas collectif et le pas cyclique des pales 11 du rotor 10 sont contrôlés et adaptés en fonction des conditions de vol.

Au sujet des hélices 6, seul le pas collectif est contrôlé et adapté en fonction des conditions de vol.

Par ailleurs, l'hélicoptère hybride 1 est réglé en vol de croisière à grande vitesse de telle sorte que le rotor 10 exerce une portance avec une éventuelle faible contribution aux forces propulsives mais sans aucune contribution à la traînée. Naturellement, ceci nécessite une puissance absorbée par ledit rotor 10 pour équilibrer le couple généré par la traînée de profil et la traînée induite des pales 11 du rotor 10, mais cette puissance est relativement réduite soit environ 500 kW comme vu précédemment en raison de la finesse f du rotor de l'ordre de 12,2 au-delà de 150 kt.

La faible contribution aux forces propulsives est faite par une légère inclinaison du disque rotor vers l'avant de l'appareil, cette solution pouvant se révéler plus favorable en terme de bilan de puissance qu'un supplément de poussée des hélices en raison d'une finesse du rotor peu sensible aux faibles variations d'assiette de l'hélicoptère hybride.

Par ailleurs, il est avantageux de pouvoir régler le moment de tangage du fuselage, car d'une part celui-ci agit directement sur le moment de flexion dans le mât rotor et donc sur les sollicitations en fatigue de ce dernier, et d'autre part traduit l'équilibre global de l'appareil résultant de la répartition de la puissance entre les hélices et le rotor. Or, cette répartition influe sur le bilan global de puissance car les hélices et le rotor ont des rendements respectifs différents.

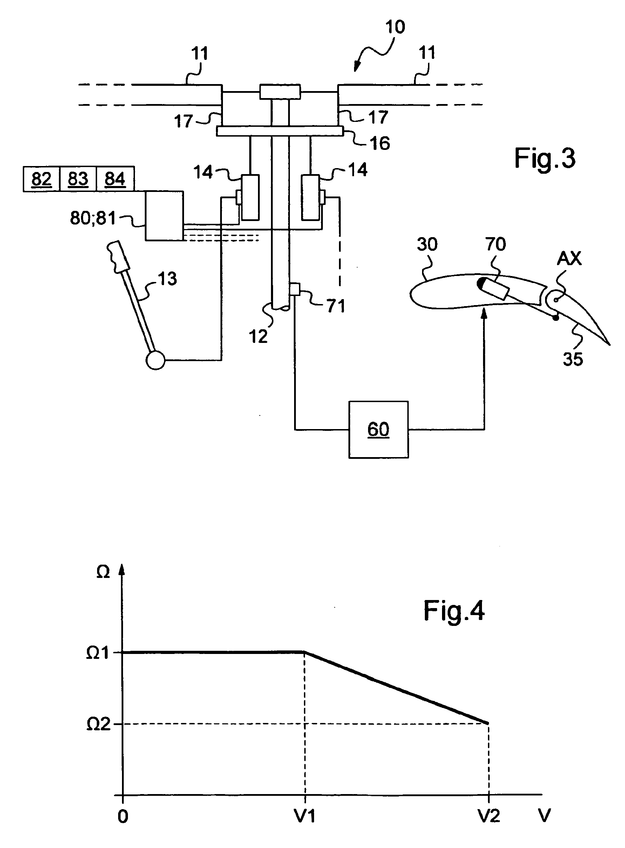

De la sorte et selon la figure 3, la manoeuvre de préférence automatique d'au moins une gouverne de profondeur mobile 35 équipant l'empennage horizontal 30 par un actionneur électrique 70 permet de régler, voire d'annuler tout moment de tangage résultant du déport du centre de gravité par rapport à la ligne d'action de la portance dudit hélicoptère hybride : ce réglage est obtenu quand le moment de flexion du mât rotor 12 par rapport à l'axe de tangage, mesuré par des jauges de contrainte 71 par exemple, est annulé. En général, cette manoeuvre est relativement lente de sorte qu'un tel actionneur porte souvent le nom de TRIM selon la désignation anglo-saxonne.

En outre et indépendamment, le pas cyclique longitudinal du rotor 10 est piloté en fonction des conditions de vol pour contrôler l'attitude du fuselage. De préférence, on maintient un angle d'assiette longitudinale égal à la valeur de la pente de la trajectoire, de façon à annuler l'angle d'incidence du fuselage et minimiser ainsi les traînées du fuselage. Par suite et lors d'un vol de croisière en palier, l'assiette longitudinale de l'hélicoptère hybride 1 sera maintenue à une valeur nulle.

En pratique, le réglage de la gouverne de profondeur 35 peut se faire de façon manuelle dans une version simplifiée. Il y a alors nécessité de disposer, sur la planche de bord, un indicateur du moment de flexion exercé sur le mât rotor 12 que le pilote doit maintenir dans une plage déterminée grâce à une action manuelle sur ladite gouverne de profondeur mobile 35 ou encore sur l'actionneur électrique 70.

Lorsque la manoeuvre de la gouverne de profondeur 35 est effectuée de façon automatique dans une version améliorée, l'actionneur électrique 70 est commandé par un calculateur 60 qui détermine le moment de flexion exercé sur le mât rotor 12, déduit des informations issues des capteurs 71, de préférence des jauges de contrainte disposées sur ledit mât rotor 12. De cette façon, le calculateur 60 cesse de braquer ladite au moins une gouverne de profondeur 35 autour de l'axe AX quand le moment de flexion exercé sur le mât rotor par rapport à l'axe de tangage est dans une plage prédéterminée correspondant sensiblement à la première valeur de consigne, préférentiellement égale à zéro du moment de tangage dudit hélicoptère hybride 1.

De la sorte, le calculateur 60, l'actionneur électrique 70 et les capteurs 71 constituent des premiers moyens pour commander automatiquement l'angle de braquage de ladite au moins une gouverne de profondeur 35 en fonction du moment de flexion exercé sur le mât rotor 12 par rapport à l'axe de tangage de l'hélicoptère hybride 1. Bien évidemment, on peut utiliser plusieurs gouvernes 35 pour cette opération.

De façon indépendante, des deuxièmes moyens (13, 14, 16, 17) commandent le pas cyclique des pales 11 du rotor 10 afin de piloter l'assiette longitudinale de l'hélicoptère hybride 1 en fonction des conditions de vol en l'adaptant à une deuxième valeur de consigne relative à ladite assiette longitudinale.

Avantageusement, ladite deuxième valeur de consigne correspond donc à un angle d'assiette longitudinale égal à la pente de la trajectoire de l'appareil comme vu ci-dessus.

En conséquence, cette deuxième valeur de l'assiette longitudinale est égale à zéro lors d'un vol en palier de l'hélicoptère hybride 1.

Lesdits deuxièmes moyens comprennent un manche cyclique 13 qui commande des servocommandes 14 pour imposer le pas cyclique des pales 11 du rotor 12 via un plateau cyclique 16 et des leviers de pas 17.

En pratique, il s'avère que le pilote peut utiliser un horizon artificiel pour assurer le maintien d'une assiette longitudinale nulle en vol de palier via l'utilisation des deuxièmes moyens (13, 14, 16, 17).

Par contre, un système adapté est à mettre en oeuvre dans le cas d'une pente quelconque de la trajectoire.

Pour ce faire, lesdits deuxièmes moyens sont complétés par un dispositif d'asservissement automatique 80 de l'assiette longitudinale de l'hélicoptère hybride 1, ce dispositif d'asservissement automatique 80 étant intégré dans un pilote automatique 81 et comprenant spécifiquement un GPS (Global Positionning System) 82 pour déterminer ladite pente de la trajectoire et une centrale AHRS (Attitude and Heading Reference System) 83 pour définir l'assiette de l'hélicoptère hybride 1 de façon à en déduire l'incidence du fuselage dudit hélicoptère hybride 1 par rapport à l'écoulement d'air et à l'annuler avec en complément une installation anémométrique 84 pour corriger les erreurs liées aux perturbations liées au vent.

En fait, cette opération de réglage consiste à bien positionner le fuselage 2 ainsi que le rotor 10 à une incidence sensiblement nulle par rapport à l'écoulement d'air, donc avec une traînée d'ensemble minimale et une finesse maximale. Par rapport à un fonctionnement en mode autogire, le bilan est favorable, la raison étant que pour de petites variations d'assiette longitudinale du rotor, la finesse de ce rotor ne varie pratiquement pas. Par suite, « tracter » le rotor se fait à iso-rendement global.

Du point de vue de la mécanique du vol, il est rappelé que le rotor 10 est destiné à assurer la totalité de la portance de l'hélicoptère hybride 1 pendant les phases de décollage, d'atterrissage et de vol vertical puis partiellement pendant le vol de croisière, l'aile 3 contribuant alors pour partie à supporter ledit hélicoptère hybride 1.

Bien évidemment, le rotor 10 étant toujours entraîné mécaniquement par les turbomoteurs 5, ce rotor 10 produit un « couple rotor résistant» ayant tendance à faire tourner le fuselage 2 en sens inverse de celui du rotor 10.

L'hélicoptère hybride 1 selon l'invention ne dispose pas de rotor anticouple dans le but de simplifier les ensembles mécaniques et de réduire en conséquence la masse et le coût de l'appareil.

Par conséquent, l'hélicoptère hybride 1 étant équipé de deux hélices 6, chacune étant installée sur une demi-aile 8 de chaque côté du fuselage 2, les fonctions anticouple et de contrôle de direction sont prévues par utilisation d'une poussée différentielle exercée par les hélices.

Autrement dit, et en vol vertical, l'hélice 6 à gauche du fuselage exerce une poussée vers l'arrière de l'appareil (ou « poussée arrière ») tandis que l'hélice 6 à droite produit une poussée vers l'avant (ou « poussée avant »), dans l'hypothèse où le rotor 10 tourne dans le sens anti-horaire, vu de dessus.

En variante, la fonction anticouple peut également être réalisée de telle sorte que, sur l'exemple précédent, l'hélice droite 6 développe par exemple une poussée doublée, l'hélice gauche 6 ne fournissant pas de poussée, étant entendu que le rotor 10 doit alors être incliné vers l'arrière de l'appareil pour équilibrer la poussée de l'hélice droite. Dans ce cas, on montre que la puissance est supérieure à celle exigée lorsque les deux hélices fournissent des poussées en sens inverse.

Par conséquent, sur la base de l'exemple présentement décrit et de la figure 4, la vitesse de rotation du rotor 10 est égale à une première vitesse de rotation Ω1 de 263 tours par minute jusqu'à une première vitesse d'avancement plus correctement dite première vitesse air sur trajectoire V1 de 125 kt. Au-delà et jusqu'à une deuxième vitesse air sur trajectoire V2 de 220 kt, la vitesse de rotation du rotor est réduite progressivement à une deuxième valeur de rotation Ω2 de 205 tours par minute. La réduction progressive de la vitesse de rotation du rotor 10 entre les première et deuxième vitesses sur trajectoire évolue selon une loi linéaire de pente (-1/R), R étant le rayon du rotor, dans un système de coordonnées où la vitesse V est en abscisse et la vitesse de rotation Ω du rotor (10) en ordonnée.

En effet, il est connu par l'homme du métier que si la vitesse de l'air augmente, le nombre de Mach à l'extrémité de la pale avançante d'un rotor de giravion atteint le nombre de Mach dit de divergence de traînée.

Alors, et à un nombre de Mach maximal inférieur ou égal au nombre de Mach dit de divergence de traînée du profil d'extrémité de pale, la vitesse de rotation du rotor doit être progressivement réduite en fonction de l'augmentation de la vitesse d'avancement de l'appareil de façon à ne pas dépasser cette limite.

Si l'on désigne par c la vitesse du son, le nombre de Mach en bout de pale avançante est égal à l'expression (V+U)/c ou encore (V+ΩR)/c. Imposer un nombre de Mach maximal égal à Mm revient bien à faire varier Ω selon la loi linéaire [(c.Mm-V)IR].

En supposant un nombre de Mach maximal égal à 0,85 et une vitesse périphérique (extrémité de pale) de 220 m/s en vol vertical (vitesse de rotation du rotor de 263 tr/mn), le nombre de Mach de la pale avançante atteint 0,85 à une vitesse air sur trajectoire de 125 kt à une altitude de 1500 mètres dans les conditions ISA (température air extérieure : 5°C).

Entre 125 et 220 kt, la vitesse de rotation du rotor est adaptée conformément à la loi précitée.

A une vitesse air sur trajectoire de l'appareil de 220 kt, la vitesse de l'air en bout de pale due à la rotation vaut alors 171 m/s (vitesse de rotation rotor : 205 tr/mn ou 78% de la vitesse de rotation nominale du rotor) et le paramètre d'avancement µ est égal à 0,66. A cette valeur du paramètre d'avancement, la portance du rotor ne peut pas être maintenue sans un accroissement important de la corde des pales (60% d'accroissement, ce qui conduirait à un hélicoptère conventionnel avec quatre pales d'un mètre de corde), afin de garder un coefficient de portance moyen des pales C_{zm} inférieur à 0,5 et d'éviter ainsi le décrochage de la pale reculante. In est clair qu'un tel surdimensionnement des pales à grande vitesse d'avancement conduirait à une augmentation significative de la masse de l'appareil et à une pénalisation des performances. En conséquence, le rotor de l'hélicoptère hybride 1, d'environ 8 tonnes de masse maximale autorisée au décollage, est progressivement déchargé par une aile 3 d'envergue L réduite qui développe une portance de l'ordre de 31% à 220 kt. Dans ces conditions, lorsque la vitesse air sur trajectoire augmente, le coefficient de portance C_{zm} des pales de 0,5 en vol vertical (déportance de l'aile estimée à 4,5%) diminue pour atteindre 0,43 à 125 kt en raison de l'augmentation de portance de l'aile 3 pour augmenter et atteindre une valeur de 0,54 à 220 kt en raison de la réduction de la vitesse de rotation du rotor à 78% de la vitesse de rotation nominale. Dans ces conditions, le rotor fonctionne à une finesse maximale de l'ordre de 12,2.

En définitive, l'architecture générale de l'hélicoptère hybride 1 selon l'invention complétée par :
- un rapport de proportionnalité constant entre les vitesses de rotation des turbomoteurs 5, du rotor 10, des hélices 6 et du système mécanique d'interconnexion 15, la chaîne cinématique étant en rotation à une première vitesse jusqu'à une première vitesse d'avancement de l'appareil, puis décroissante à une deuxième vitesse de rotation jusqu'à une deuxième vitesse d'avancement égale à la vitesse maximale d'avancement,
- un dispositif 70 de contrôle et de maintien de l'assiette longitudinale de l'appareil à une valeur nulle et sans rotor arrière,
- une chaîne cinématique intégrée 4,
- un système mécanique d'interconnexion 15, préféré à un rotor thermopropulsé, pour un meilleur rendement mécanique et un moindre bruit,
contribuent à l'obtention de performances élevées.

Ainsi, l'hélicoptère hybride 1 est caractérisé par une polyvalence exceptionnelle qui permet d'optimiser le compromis entre la vitesse, la distance franchissable et la masse de l'appareil. A titre d'exemple et avec environ deux tonnes de carburant, on peut obtenir les performances suivantes pour un hélicoptère hybride 1 de l'ordre de huit tonnes transportant seize passagers :
- autonomie en vol vertical : 4,2 heures,
- distance franchissable à 220 kt : 511 nm,
- distance franchissable à la vitesse de croisière économique de 125 kt : 897 nm.

De même et encore à titre d'exemple, une mission de 400 nm à 220 kt est réalisable avec environ 1,6 tonne de carburant et 20 minutes de réserve.

Ces résultats démontrent l'importante flexibilité et adaptabilité de l'hélicoptère hybride 1 et les avantages par rapport à un hélicoptère conventionnel. En effet, la vitesse de croisière d'un hélicoptère conventionnel n'a qu'une influence mineure sur la consommation de carburant pendant la mission, la vitesse maximale de croisière étant relativement proche de la vitesse en croisière économique de sorte que la seule possibilité offerte pour augmenter de façon significative la distance franchissable de l'appareil est de réduire le nombre de passagers au profit d'une quantité de carburant supplémentaire.

Naturellement, la présente invention est sujette à de nombreuses variations quant à sa mise en oeuvre. En particulier, il importe de noter que l'invention telle que décrite concerne notamment un hélicoptère hybride de l'ordre de 8 tonnes de masse totale. Toutefois, cette invention est applicable à tout giravion d'une masse quelconque, d'un drone à faible masse par exemple jusqu'à un appareil de très gros tonnage. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Hélicoptère hybride (1) à grande distance franchissable et à vitesse d'avancement élevée comprenant :
- une cellule composée par :
• un fuselage (2),
• une surface sustentatrice (3), fixée au fuselage (2),
• des surfaces de stabilisation et de manoeuvre, à savoir pour la profondeur, un empennage horizontal (30) avec au moins une gouverne de profondeur (35) mobile par rapport à la partie avant (34) et pour la direction, au moins un empennage approprié (40),
- une chaîne cinématique intégrée (4) constituée par :
• un système mécanique d'interconnexion (15) entre d'une part un rotor (10) de rayon (R) avec un contrôle du pas collectif et du pas cyclique des pales (11) dudit rotor (10) et d'autre part au moins une hélice (6) avec un contrôle du pas collectif des pales de ladite hélice (6),
• au moins un turbomoteur (5) entraînant ce système mécanique d'interconnexion (15),
**caractérisé en ce que** les vitesses de rotation de sortie dudit au moins un turbomoteur (5), de ladite au moins une hélice (6), dudit rotor (10) et dudit système mécanique d'interconnexion (15) sont proportionnelles entre elles, le rapport de proportionnalité étant constant quelle que soit la configuration de vol de l'hélicoptère hybride (1) en conditions normales de fonctionnement de la chaîne cinamétique intégrée.

2. Hélicoptère hybride (1) selon la revendication 1,
**caractérisé en ce que** l'empennage (40) comprend en avant une dérive fixe (44) équipée d'une gouverne de direction mobile (45) pour le pilotage en lacet.

3. Hélicoptère hybride (1) selon l'une quelconque des revendications 1 ou 2,
**caractérisé en ce que** ledit rotor (10) exerce d'une part la totalité de la portance nécessaire au décollage, à l'atterrissage, en vol stationnaire et en vol vertical et d'autre part toujours une partie de la portance nécessaire en vol de croisière, ledit rotor (10) étant toujours entraîné en rotation par ledit au moins un turbomoteur (5), et ce sans participation ni à la traction, ni à la traînée mais avec une puissance absorbée réduite.

4. Hélicoptère hybride (1) selon l'une quelconque des revendications 1 ou 2,
**caractérisé en ce que** ledit rotor (10) exerce d'une part la totalité de la portance nécessaire au décollage, à l'atterrissage, en vol stationnaire et en vol vertical et d'autre part toujours une partie de la portance nécessaire en vol de croisière, ledit rotor (10) étant toujours entraîné en rotation par ledit au moins un turbomoteur (5), et ce avec une contribution réduite à la traction, mais sans contribution à la traînée et avec une puissance absorbée réduite.

5. Hélicoptère hybride (1) selon l'une quelconque des revendications 3 ou 4,
**caractérisé en ce que** la portance développée par le rotor (10) vaut 1,05 fois environ le poids de l'hélicoptère hybride (1) pour une vitesse air sur trajectoire nulle et entre 0,6 et 0,9 fois ce poids de l'hélicoptère à la vitesse air sur trajectoire maximale.

6. Hélicoptère hybride (1) selon l'une quelconque des revendications précédentes,
**caractérisé en ce que** l'envergure de l'aile (3), composée de deux demi-ailes (8), est sensiblement égale au rayon (R) du rotor (10).

7. Hélicoptère hybride (1) selon l'une quelconque des revendications 1 à 6,
**caractérisé en ce que** l'aile (3) est en position haute par rapport au fuselage (2), le dièdre de l'aile (3) étant négatif.

8. Hélicoptère hybride (1) selon l'une quelconque des revendications 1 à 6,
**caractérisé en ce que** l'aile (3) est en position basse par rapport au fuselage (2), le dièdre de l'aile (3) étant positif.

9. Hélicoptère hybride (1) selon l'une quelconque des revendications 1 à 6,
**caractérisé en ce que** l'aile (3) est en une position intermédiaire entre la position haute et la position basse.

10. Hélicoptère hybride (1) selon l'une quelconque des revendications 6 à 9,
**caractérisé en ce que** l'allongement (λ) de l'aile (3) est de l'ordre de 5,30.

11. Hélicoptère hybride (1) selon l'une quelconque des revendications précédentes,
**caractérisé en ce que** ledit hélicoptère hybride (1) est équipé de deux hélices (6), chaque hélice (6) est située à une extrémité externe de l'aile (3).

12. Hélicoptère hybride (1) selon l'une quelconque des revendications précédentes,
**caractérisé en ce que** le pas collectif et le pas cyclique des pales (11) du rotor (10) sont contrôlés et adaptés en fonction des conditions de vol.

13. Hélicoptère hybride (1) selon l'une quelconque des revendications précédentes,
**caractérisé en ce que** le pas collectif des hélices (6) est contrôlé et adapté en fonction des conditions de vol.

14. Hélicoptère hybride (1) selon l'une quelconque des revendications précédentes,
**caractérisé en ce que** l'empennage horizontal (30) et l'empennage vertical (40) forment un ensemble monobloc en forme de U renversé vers le fuselage (2).

15. Hélicoptère hybride (1) selon l'une quelconque des revendications précédentes,
**caractérisé en ce que** deux turbomoteurs (5) sont disposés sur le fuselage (2).

16. Hélicoptère hybride (1) selon l'une quelconque des revendications 1 à 14,
**caractérisé en ce que** deux turbomoteurs (5) sont disposés sur l'aile (3), chaque turbomoteur (5) étant de part et d'autre dudit fuselage (2).

17. Hélicoptère hybride (1) selon l'une quelconque des revendications précédentes,
**caractérisé en ce que** la fonction anticouple est réalisée par une seule hélice (6).

18. Hélicoptère hybride (1) selon l'une quelconque des revendications 1 à 16,
**caractérisé en ce que** la fonction anticouple est réalisée par une poussée différentielle entre les deux hélices (6), l'une exerçant une poussée vers l'avant et l'autre une poussée vers l'arrière de l'hélicoptère hybride (1).

## Claims

1. Hybrid helicopter (1) having a long range and a high forward speed, the helicopter comprising:
- an airframe made up of:
• a fuselage (2);
• a lift-providing surface (3) secured to the fuselage (2); and
• stabilising and manoeuvring surfaces, namely for pitch: a horizontal stabiliser (30) with at least one pitch control surface (35) that is movable relative to the front portion (34); and for steering: at least one suitable stabiliser (40); and
- an integrated drive system (4) constituted by:
• a mechanical interconnection system (15) between firstly a rotor (10) of radius (R) with collective pitch and cyclic pitch control of the blades (11) of said rotor (10), and secondly at least one propeller (6) with collective pitch control of the blades of said propeller (6); and
• at least one turbine engine (5) driving the mechanical interconnection system (15);
**characterised in that** the output speeds of rotation of said at least one turbine engine (5), of said at least one propeller (6), of said rotor (10), and of said mechanical interconnection system (15) are mutually proportional, the proportionality ratio being constant regardless of the flight configuration of the hybrid helicopter (1) under normal operating conditions of the integrated drive system.

2. Hybrid helicopter (1) according to Claim 1,
**characterised in that** the stabiliser (40) comprises at the front a non-moving fin (44) fitted with a movable steering rudder (45) for yaw control.

3. Hybrid helicopter (1) according to either one of Claims 1 and 2,
**characterised in that** said rotor (10) firstly exerts all of the lift needed for takeoff, for landing, for hovering, and for flying vertically, and secondly always provides part of the lift needed for cruising flight, said rotor (10) being always driven in rotation by said at least one turbine engine (5), without participating in traction or in drag, but with reduced absorbed power.

4. Hybrid helicopter (1) according to either one of Claims 1 and 2,
**characterised in that** said rotor (10) firstly exerts all of the lift needed for takeoff, for landing, for hovering, and for flying vertically, and secondly always provides part of the lift needed for cruising flight, said rotor (10) being always driven in rotation by said at least one turbine engine (5), with reduced contribution to traction but no contribution to drag, and with reduced absorbed power.

5. Hybrid helicopter (1) according to either one of Claims 3 and 4,
**characterised in that** the lift developed by the rotor (10) is about 1.05 times the weight of the hybrid helicopter (1) for a flight-path airspeed of zero, and between 0.6 and 0.9 times the weight of the helicopter at maximum flight-path airspeed.

6. Hybrid helicopter (1) according to any one of the preceding claims,
**characterised in that** the span of the wing (3) made up of two half-wings (8) is substantially equal to the radius (R) of the rotor (10).

7. Hybrid helicopter (1) according to any one of Claims 1 to 6,
**characterised in that** the wing (3) is in the high position relative to the fuselage (2), the dihedral angle of the wing (3) being negative.

8. Hybrid helicopter (1) according to any one of Claims 1 to 6,
**characterised in that** the wing (3) is in the low position relative to the fuselage (2), the dihedral angle of the wing (3) being positive.

9. Hybrid helicopter (1) according to any one of Claims 1 to 6,
**characterised in that** the wing (3) is in an intermediate position between the high position and the low position.

10. Hybrid helicopter (1) according to any one of Claims 6 to 9,
**characterised in that** the aspect ratio (λ) of the wing (3) is about 5.30.

11. Hybrid helicopter (1) according to any one of the preceding claims,
**characterised in that** said hybrid helicopter (1) is fitted with two propellers (6), each propeller (6) being situated at an outside end of the wing (3).

12. Hybrid helicopter (1) according to any one of the preceding claims,
**characterised in that** the collective pitch and the cyclic pitch of the blades (11) of the rotor (10) are controlled and adapted as a function of flight conditions.

13. Hybrid helicopter (1) according to any one of the preceding claims,
**characterised in that** the collective pitch of the propellers (6) is controlled and adapted as a function of flight conditions.

14. Hybrid helicopter (1) according to any one of the preceding claims,
**characterised in that** the horizontal stabiliser (30) and the vertical stabiliser (40) together form an upside-down U-shaped one-piece unit relative to the fuselage (2).

15. Hybrid helicopter (1) according to any one of the preceding claims,
**characterised in that** two turbine engines (5) are disposed on the fuselage (2).

16. Hybrid helicopter (1) according to any one of Claims 1 to 14,
**characterised in that** two turbine engines (5) are disposed on the wing (3), the turbine engines (5) being located on either side of said fuselage (2).

17. Hybrid helicopter (1) according to any one of the preceding claims,
**characterised in that** the antitorque function is performed by a single propeller (6).

18. Hybrid helicopter (1) according to any one of Claims 1 to 16,
**characterised in that** the antitorque function is performed by differential thrust between the two propellers (6), one exerting thrust towards the front and the other exerting thrust towards the rear of the hybrid helicopter (1).

## Patentansprüche

1. Hybrid-Hubschrauber (1) für Langstreckenflüge und mit hoher Reisegeschwindigkeit, der aufweist:
- eine Zelle, die aufgebaut ist aus
• einem Rumpf (2),
• einer Tragfläche (3), die am Rumpf (2) befestigt ist,
• Stabilisierungs- und Manövrierflächen, und zwar für die Höhe ein Höhenleitwerk (30) mit mindestens einem Höhenruder (35), das in Bezug auf den vorderen Teil (34) beweglich ist, und für die Lenkung mindestens ein geeignetes Leitwerk (40),
- einen integrierten Antriebsstrang (4), der aufgebaut ist aus
• einem mechanischen Verbundsystem (15) zwischen einerseits einem Rotor (10) vom Radius (R) mit einer Steuerung des kollektiven Anstellwinkels und des zyklischen Einstellwinkels der Rotorblätter (11) des Rotors (10) und andererseits mindestens einem Propeller (6) mit einer Steuerung des kollektiven Anstellwinkels der Blätter des Propellers (6),
• mindestens einem Turbomotor (5), der dieses mechanische Verbundsystem (15) antreibt,
**dadurch gekennzeichnet, dass** die Ausgangs-Drehzahlen des mindestens einen Turbomotors (5), des mindestens einen Propellers (6), des Rotors (10) und des mechanischen Verbundsystems (15) untereinander proportional sind, wobei das Proportionalitätsverhältnis unabhängig von der Flugkonfiguration des Hybrid-Hubschraubers (1) unter normalen Betriebsbedingungen des integrierten Antriebsstrangs konstant ist.

2. Hybrid-Hubschrauber (1) nach Anspruch 1,
**dadurch gekennzeichnet, dass** das Leitwerk (40) vorn eine feste Abbiegung (44) aufweist, die mit einem beweglichen Seitenruder (45) für die Seitensteuerung ausgerüstet ist.

3. Hybrid-Hubschrauber (1) nach Anspruch 1 oder 2,
**dadurch gekennzeichnet, dass** der Rotor (10) einerseits den gesamten Auftrieb, der für den Start, die Landung, im stationären Flug und im vertikalen Flug erforderlich ist, und andererseits stets einen Teil des im Vorwärtsflug erforderlichen Auftriebs aufbringt, wobei der Rotor (10) stets durch den Antrieb des mindestens einen Turbomotors (5) in Rotation gehalten wird, und zwar ohne Beteiligung an der Traktion oder bezüglich des Luftwiderstands, jedoch mit einer verringerten Antriebsleistung.

4. Hybrid-Hubschrauber (1) nach Anspruch 1 oder 2,
**dadurch gekennzeichnet, dass** der Rotor (10) einerseits den gesamten Auftrieb, der für den Start, die Landung, im stationären Flug und im vertikalen Flug erforderlich ist, und andererseits stets einen Teil des im Vorwärtsflug erforderlichen Auftriebs aufbringt, wobei der Rotor (10) stets durch den Antrieb des mindestens einen Turbomotors (5) in Rotation gehalten wird, und zwar mit einem verringerten Beitrag zur Traktion, jedoch ohne Beitrag bezüglich des Luftwiderstands und mit einer verringerten Antriebsleistung.

5. Hybrid-Hubschrauber (1) nach Anspruch 3 oder 4,
**dadurch gekennzeichnet, dass** der durch den Rotor (10) entwickelte Auftrieb für eine Luftgeschwindigkeit in der Flugbahn von Null etwa das 1,05-Fache des Gewichts des Hybrid-Hubschraubers (1) und bei maximaler Luftgeschwindigkeit in der Flugbahn das 0,6- bis 0,9-Fache dieses Gewichts des Hubschraubers beträgt.

6. Hybrid-Hubschrauber (1) nach einem der vorhergehenden Ansprüche,
**dadurch gekennzeichnet, dass** die Spannweite des Flügels (3), die sich aus zwei Halbflügeln (8) zusammensetzt, im Wesentlichen gleich dem Radius (R) des Rotors (10) ist.

7. Hybrid-Hubschrauber (1) nach einem der Ansprüche 1 bis 6,
**dadurch gekennzeichnet, dass** sich der Flügel (3) in Bezug auf den Rumpf (2) in oberer Position befindet, wobei der Diederwinkel des Flügels (3) negativ ist.

8. Hybrid-Hubschrauber (1) nach einem der Ansprüche 1 bis 6,
**dadurch gekennzeichnet, dass** sich der Flügel (3) in Bezug auf den Rumpf (2) in unterer Position befindet, wobei der Diederwinkel des Flügels (3) positiv ist.

9. Hybrid-Hubschrauber (1) nach einem der Ansprüche 1 bis 6,
**dadurch gekennzeichnet, dass** sich der Flügel (3) in einer Zwischenposition zwischen der oberen und der unteren Position befindet.

10. Hybrid-Hubschrauber (1) nach einem der Ansprüche 6 bis 9,
**dadurch gekennzeichnet, dass** die Ausdehnung (λ) des Flügels (3) größenordnungsmäßig 5,30 beträgt.

11. Hybrid-Hubschrauber (1) nach einem der vorhergehenden Ansprüche,
**dadurch gekennzeichnet, dass** der Hybrid-Hubschrauber (1) mit zwei Propellern (6) ausgerüstet ist, wobei sich jeder Propeller (6) an einem äußeren Ende des Flügels (3) befindet.

12. Hybrid-Hubschrauber (1) nach einem der vorhergehenden Ansprüche,
**dadurch gekennzeichnet, dass** der kollektive Anstellwinkel und der zyklische Einstellwinkel der Rotorblätter (11) des Rotors (10) in Abhängigkeit von den Flugbedingungen gesteuert und angepasst werden.

13. Hybrid-Hubschrauber (1) nach einem der vorhergehenden Ansprüche,
**dadurch gekennzeichnet, dass** der kollektive Anstellwinkel der Propeller (6) in Abhängigkeit von den Flugbedingungen gesteuert und angepasst wird.

14. Hybrid-Hubschrauber (1) nach einem der vorhergehenden Ansprüche,
**dadurch gekennzeichnet, dass** das horizontale Leitwerk (30) und das vertikale Leitwerk (40) eine Einblock-Konstruktion in Form eines in Bezug auf den Rumpf (2) umgekehrten U bilden.

15. Hybrid-Hubschrauber (1) nach einem der vorhergehenden Ansprüche,
**dadurch gekennzeichnet, dass** zwei Turbomotoren (5) am Rumpf (2) angeordnet sind.

16. Hybrid-Hubschrauber nach einem der Ansprüche 1 bis 14,
**dadurch gekennzeichnet, dass** zwei Turbomotoren (5) am Flügel (3) angeordnet sind, wobei sich jeder Turbomotor (5) auf einer der Seiten des Rumpfs (2) befmdet.

17. Hybrid-Hubschrauber (1) nach einem der vorhergehenden Ansprüche,
**dadurch gekennzeichnet, dass** die Funktion des Giermomentausgleichs durch einen einzigen Propeller (6) erfolgt.

18. Hybrid-Hubschrauber (1) nach einem der Ansprüche 1 bis 16,
**dadurch gekennzeichnet, dass** die Funktion des Giermomentausgleichs durch eine unterschiedliche Schubwirkung zwischen den beiden Propellern (6) erfolgt, wobei der eine Propeller eine Schubwirkung in Vorwärtsrichtung und der andere Propeller eine Schubwirkung in Rückwärtsrichtung des Hybrid-Hubschraubers (1) ausübt.
